Europäisches Patentamt

European Patent Office

Office européen des brevets

(19)

(11) Veröffentlichungsnummer: **0 350 884**
**A2**

(12) **EUROPÄISCHE PATENTANMELDUNG**

(21) Anmeldenummer: 89112715.1

(22) Anmeldetag: 12.07.89

(51) Int. Cl.⁴: **B01D 24/04 , B01D 24/12 , C02F 1/00**

(30) Priorität: 14.07.88 DE 8808609 U

(43) Veröffentlichungstag der Anmeldung:
17.01.90 Patentblatt 90/03

(84) Benannte Vertragsstaaten:
AT BE CH DE ES FR GB GR IT LI LU NL SE

(71) Anmelder:
SUREX-WASSERAUFBEREITUNGSANLAGEN GESELLSCHAFT MIT BESCHRÄNKTER HAFTUNG
Silberbachstrasse 7
D-6204 Taunusstein-Wehen(DE)

(72) Erfinder: **Brüggemann, Dietrich**
**Frankfurter Strasse 5**
**D-6200 Wiesbaden(DE)**

(74) Vertreter: **Blumbach Weser Bergen Kramer Zwirner Hoffmann Patentanwälte**
**Sonnenbergerstrasse 43**
**D-6200 Wiesbaden 1(DE)**

(54) **Wasserfiltrationsgerät mit Filtereinsatz.**

(57) Wasserfiltrationsgerät mit Filtereinsatz (1), der eine achsparallele Einsenkung (7) entlang des Umfangs aufweist, um mit einem Vorsprung (27) des Wassertrichters (20) zusammenzuwirken.

EP 0 350 884 A2

# Fig. 1

## Wasserfiltrationsgerät mit Filtereinsatz

Die Erfindung betrifft ein Wasserfiltrationsgerät mit Filtereinsatz, der etwa kreiszylindrisch ausgebildet ist und einen mit Einlauföffnungen versehenen Deckel, bodenseitige Auslauföffnungen und eine Füllung aus Filtermaterial besitzt.

Filtereinsätze der vorgenannten Art sind handelsüblich. Sie werden in Wasserfiltrationsgeräten eingesetzt, die vorwiegend im Haushalt verwendet werden und aus einer Kanne mit einem aufgesetzten Trichter bestehen. Der Trichter weist eine Öffnung zur Aufnahme des Filtereinsatzes auf, so daß der Einsatz schnell ausgetauscht werden kann, wenn er verbraucht ist.

Das Auswechseln des Filtereinsatzes muß bequem und ohne Vorkenntnisse auch durch ungeübte Personen möglich sein, wobei aber sichergestellt sein muß, daß eine ausreichende Abdichtung zwischen dem Filtereinsatz und dem auf die Kanne aufgesetzten Filter erreicht wird und erhalten bleibt, damit das zu filtrierende Wasser nicht am Filter vorbei in die Kanne läuft. Da der Trichter mit dem Filtereinsatz und gegebenenfalls einem Deckel auch beim Ausgießen von Wasser auf der Kanne verbleibt, muß außerdem sichergestellt sein, daß der Einsatz auch bei größerer Neigung sicher im Trichter gehalten bleibt, damit beim späteren Nachfüllen von Wasser in den Trichter keine Undichtigkeit auftritt.

Der Erfindung liegt demgemäß die Aufgabe zugrunde, ein Wasserfiltrationsgerät mit Filtereinsatz zu schaffen, der auch unter ungünstigen Bedingungen eine gute Qualität des gefilterten Wassers sicherstellt und ein Lockern oder Herausfallen trotz weiterhin bequemer Auswechslungsmöglichkeit gegeben ist.

Die Lösung der Aufgabe besteht darin, daß der Einsatz wenigstens eine achsparallele, am Umfang verlaufende, rinnenförmige Einsenkung aufweist. Die rinnenförmige Einsenkung nimmt einen am Wassertrichter angeordneten Vorsprung auf, der sich leicht so ausbilden läßt, daß sich unter Nachgeben der Wand des Filtereinsatzes im Bereich der Einsenkung eine ausreichende Klemmwirkung ergibt. Da diese Klemmwirkung nur punktförmig auftritt, kann auch unter Berücksichtigung von Toleranzen des Filtereinsatzes und des Wassertrichters sowie bei einem geringfügigen Verziehen dieser Teile erreicht werden, daß die Klemmwirkung im erwünschten Bereich bleibt, also nicht etwa das Herausziehen des Einsatzes zu sehr erschwert wird. Ohne die Einsenkung läßt sich eine gewünschte Klemmkraft nur mit sehr präzisen Passungen und auch dann nicht über längere Zeit im rauhen Betrieb erreichen.

Weiterbildungen der Erfindung sind Gegenstand der Unteransprüche. So beginnt die Einsenkung zweckmäßig unterhalb des Deckelrandes und läuft dann bis zum Boden durch. Dadurch wird die Abdichtung zwischen dem Deckel und dem Einsatz, die meist miteinander verschweißt sind, nicht gestört. Die Einsenkung kann mit unterschiedlichen Querschnitten ausgeführt sein, ist aber zweckmäßig im Querschnitt halbkreisförmig.

Zur Verbesserung der Klemmwirkung ohne zu große Unterschiede zwischen dem trockenen und nassen Zustand kann vorgesehen sein, daß die Einsenkung wenigstens in ihrem an den Deckel angrenzenden Bereich mit einer Aufrauhung, Riffelung oder Rasterung versehen ist. Der Vorsprung im Wassertrichter kann entsprechend ausgebildet sein.

Die Haltekraft zwischen dem Filtereinsatz und dem Wassertrichter läßt sich auch dadurch verbessern, daß die Einsenkung in ihrem an den Deckel angrenzenden Endbereich mit einer seitlichen und/oder in das Einsatzinnere gerichteten Erweiterung versehen ist. Der Vorsprung im Wassertrichter kann dann so ausgebildet sein, daß er unter leichtem Einschnappen in die Erweiterung eindringt. Dadurch ist eine definierte Lage des Einsatzes sichergestellt.

Zur Verbesserung der Filterwirkung einerseits und zum Festhalten der körnigen Füllung andererseits sieht eine zweckmäßige Weiterbildung vor, daß zwischen der Füllung einerseits und dem Boden und dem Deckel des Filtereinsatzes andererseits je eine Filtergaze angeordnet ist. Im Bereich des Deckels dient die Gaze dann außerdem als Vorfilter und im Bereich des Bodens als Nachfilter. Die Filtergaze ist mit Vorzug aus Kunststoffäden hergestellt und im Randbereich mit dem Einsatz bzw. mit dem Deckel verschweißt. Die Maschenweite der Filtergaze kann im Bereich zwischen 20 und 80 $\mu m$, vorzugsweise bei etwa 45 $\mu m$ liegen.

Wenn zwei unterschiedliche Filtermaterialien im Einsatz benutzt werden sollen, beispielsweise im oberen Teil Harzkügelchen und im unteren Teil Aktivkohlekörner, so kann im Inneren des Filtersatzes eine Siebplatte durch randseitiges Einschnappen in eine Innenrille der Einsatzwand festgelegt sein.

Nachfolgend wird ein Ausführungsbeispiel der Erfindung anhand der Zeichnung beschrieben. Es zeigen:

Fig. 1 eine Ansicht von unten eines Filtereinsatzes nach der Erfindung;

Fig. 2 die Seitenansicht des Filtereinsatzes nach Fig. 1;

Fig. 3 eine Ansicht des Filtereinsatzes von oben,

Fig. 4 eine vergrößerte Einzelheit des Filtereinsatzes und

Fig. 5 eine Seitenansicht eines Wassertrichters, teilweise geschnitten.

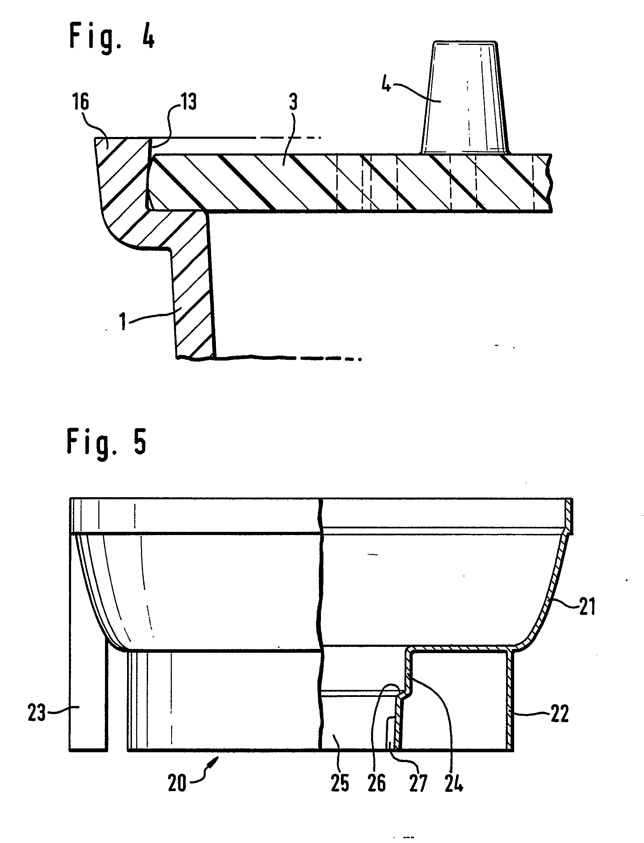

Der Filtereinsatz 1 hat etwa die Form eines Kreiszylinders, der unterhalb eines Flanschrandes 16 zum Boden 2 hin leicht konisch zuläuft. Der Einsatz 1 ist mit einem handelsüblichen Filtermaterial (nicht gezeigt) gefüllt, das beispielsweise aus Harzkügelchen und Aktivkohle bestehen kann, die gegebenenfalls auch wenigstens teilweise versilbert ist. Nach oben wird der Einsatz 1 durch einen Deckel 3 abgeschlossen, der einen zentralen Griff 4 besitzt. Der Deckel 3 ist mit dem Einsatz 1 verschweißt oder auf diesen aufgesteckt, wie Fig. 4 zeigt.

Dabei ist die Innenfläche 13 des Flanschrandes im Durchmesser etwa 0,3 bis 0,4 mm enger als der Außendurchmesser des Deckels 3, der wie dargestellt am Rand abgerundet ist. Die Innenfläche 13 kann sich leicht konisch erweitern. Die Teile bestehen aus Kunststoff, z. B. Polypropylen.

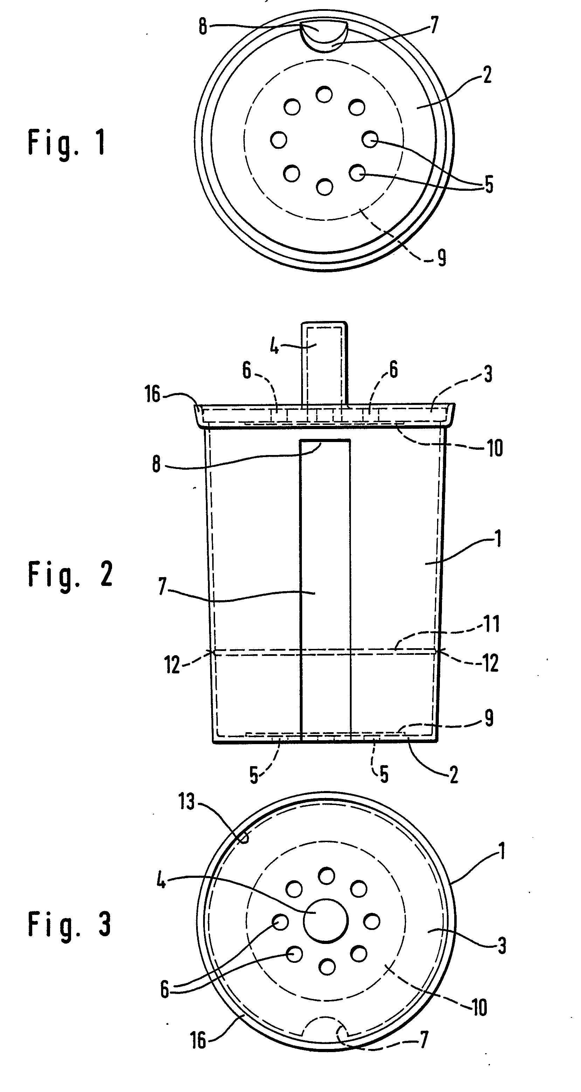

Wie insbesondere die Fig. 1 und 3 erkennen lassen, weisen der Deckel 3 des Filtereinsatzes Öffnungen 5 bzw. 6 auf, die als Einlauf dienen, und der Boden 2 Öffnungen 6, die als Auslauf dienen.

Fig. 5 zeigt einen Wassertrichter 20, der eine schüsselförmige Wand 21, eine ringförmige Stützwand 22, einen Griff 23 und eine Filterhaltewand 24 aufweist. Die Wand 24 umschließt einen Raum 25, der die gleiche Umrißform wie der Filtereinsatz 1 hat und insbesondere eine Schulter 26 und einen nasenförmigen Vorsprung 27 aufweist. Der Einsatz 1 kann demnach von oben in den Raum 25 eingefügt werden, wobei der Flanschrand 16 auf der Schulter 26 aufruht.

Am Umfang des Einsatzes 1 ist eine achsparallele, rinnenförmige Einsenkung 7 angeordnet. Sie besitzt etwa halbkreisförmigen Querschnitt, läuft bis zum Boden 2 durch, durchstößt diesen und endet bei 8 unterhalb des Deckels 3. Im oberen Bereich kann die Einsenkung 7 eine aufgerauhte Oberfläche aufweisen, was beispielsweise durch Riffelung oder Rasterung erzeugt werden kann. Es ist auch möglich, die Einsenkung 7 in ihren dem Deckelrand 16 angrenzenden Endbereich mit einer Erweiterung zu versehen, die seitlich angeordnet ist oder in das Einsatzinnere gerichtet ist. In diese Einsenkung 7 dringt der nasenförmige Vorsprung 27 des Wasserfiltrationsgerätes klemmend ein und hält den Einsatz definiert fest.

Im Bereich der Bodenöffnungen 5 ist eine kreisringförmig ausgestanzte Filtergaze 9 und im Bereich der Deckelöffnungen 6 eine ähnliche Filtergaze 10 aufgeschweißt. Zu diesem Zweck ist die Filtergaze 9, 10 aus schweißbaren Kunststofffäden hergestellt. Die Maschenweite der Filtergaze beträgt etwa 45 μm, es sind aber auch Maschenweiten zwischen 20 und 80 μm brauchbar. Durch die Filtergaze 9 bzw. 10 wird verhindert, daß Körnchen oder Kügelchen der Füllung im trockenen oder naßen Zustand herausfallen. Außerdem wirkt die Filtergaze als Vor- bzw. Nachfilter. Wenn die obere Filtergaze 10 im Betrieb naß wird, hängt sie nach dem Durchlaufen des Wassers durch den Einsatz geringfügig durch, weil sie nur im Randbereich verschweißt ist. Die Öffnungen 6 sind dann frei, und es ergibt sich eine gute Belüftungswirkung. Zur Sicherstellung einwandfreier Wasserqualität hat die Filtergaze Lebensmittelqualität.

Eine nur schematisch dargestellte Siebplatte 11 teilt den Einsatz in zwei Kammern, so daß unterschiedliche Filtermaterialien eingefüllt sein können. Die Siebplatte 11 wird in den Filtereinsatz 1 eingedrückt und rastet dann mit ihrem Rand in eine Rille 12 auf der Innenseite der Wand ein.

## Ansprüche

1. Wasserfiltrationsgerät mit Filtereinsatz, der etwa kreiszylindrisch ausgebildet ist und einen mit Einlauföffnungen (6) versehenen Deckel (3), bodenseitige Auslauföffnungen (5) und eine Füllung aus Filtermaterial besitzt,
dadurch gekennzeichnet,
daß der Einsatz (1) wenigstens eine achsparallele, am Umfang verlaufende, rinnenförmige Einsenkung (7) aufweist.

2. Wasserfiltrationsgerät nach Anspruch 1,
dadurch gekennzeichnet, daß die Einsenkung (7) unterhalb eines Flanschrandes (16) beginnt und bis zum Boden (2) durchläuft.

3. Wasserfiltrationsgerät nach Anspruch 1 oder 2,
dadurch gekennzeichnet, daß die Einsenkung (7) im Querschnitt halbkreisförmig ist.

4. Wasserfiltrationsgerät nach einem der Ansprüche 1 bis 3,
dadurch gekennzeichnet, daß die Einsenkung (7) wenigstens in ihrem, an den Flanschrand (16) angrenzenden Bereich (8) mit einer Aufrauhung, Riffelung oder Rasterung versehen ist.

5. Wasserfiltrationsgerät nach einem der Ansprüche 1 bis 4,
dadurch gekennzeichnet, daß die Einsenkung (7) in ihrem an den Flanschrand (16) angrenzenden Endbereich mit einer Erweiterung versehen ist.

6. Wasserfiltrationsgerät nach einem der Ansprüche 1 bis 5,
dadurch gekennzeichnet, daß zwischen der Füllung einerseits und dem Boden (2) und dem Deckel (3) andererseits je eine Filtergaze (9, 10) angeordnet ist und
daß die Filtergaze (9, 10) aus Kunststofffäden hergestellt und im Randbereich mit dem Einsatz (1) bzw. mit dem Deckel (3) verschweißt ist.

7. Wasserfiltrationsgerät nach Anspruch 6, dadurch gekennzeichnet, daß die Maschenweite der Filtergaze (9, 10) im Bereich zwischen 20 und 80 μm, vorzugsweise bei etwa 45 μm, liegt.

8. Wasserfiltrationsgerät nach einem der Ansprüche 1 bis 7, dadurch gekennzeichnet, daß im Inneren des Filtereinsatzes (1) eine Siebplatte (11) durch randseitiges Einschnappen in eine Innenrille (12) der Einsatzwand festgelegt ist.

9. Wasserfiltrationsgerät nach einem der Ansprüche 1 bis 8, dadurch gekennzeichnet, daß der Deckel (3) mit Preßsitz in einen von Flanschrand (16) umschlossenen Raum (13) aufgenommen ist.

10. Wasserfiltrationsgerät nach einem der Ansprüche 1 bis 8, dadurch gekennzeichnet, daß ein Wassertrichter (20) einen Aufnahmeraum (25) zur Aufnahme des Filtereinsatzes (1) aufweist und daß ein in diesen Aufnahmeraum (25) ragender Vorsprung (27) vorgesehen ist.

Fig. 1

Fig. 2

Fig. 3

## Fig. 4

## Fig. 5